(19) Europäisches Patentamt / European Patent Office / Office européen des brevets

(11) **EP 3 424 735 A1**

(12) **EUROPEAN PATENT APPLICATION**
published in accordance with Art. 153(4) EPC

(43) Date of publication:
09.01.2019 Bulletin 2019/02

(51) Int Cl.:
*B41J 29/393* (2006.01)  *B41J 2/525* (2006.01)
*G01J 3/52* (2006.01)  *H04N 1/46* (2006.01)
*H04N 1/60* (2006.01)

(21) Application number: 17759634.3

(22) Date of filing: 13.02.2017

(86) International application number:
PCT/JP2017/005185

(87) International publication number:
WO 2017/150163 (08.09.2017 Gazette 2017/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 01.03.2016 JP 2016038522

(71) Applicant: Seiko Epson Corporation
Tokyo 160-8801 (JP)

(72) Inventor: FUKASAWA Kenji
Suwa-shi
Nagano 392-8502 (JP)

(74) Representative: Miller Sturt Kenyon
9 John Street
London WC1N 2ES (GB)

(54) **COLOR SELECTION COLOR CHART, COLOR SELECTION COLOR CHART-GENERATING METHOD, AND COLOR SELECTION COLOR CHART-GENERATING PROGRAM**

(57) Provided is a color chart for color selection including efficiently arranged color patches.

Provided is a color chart for color selection including a plurality of color patches including a first color patch, a second color patch, and a third color patch arranged in order and satisfying at least one of the following conditions (a) and (b). (a) An absolute value of a lightness difference between the first color patch and the second color patch in a first scale that is perceptually more uniform than lightness in the CIE L*a*b* color system and an absolute value of a lightness difference between the second color patch and the third color patch in the first scale are identical. (b) An absolute value of a chroma difference between the first color patch and the second color patch in a second scale that is perceptually more uniform than chroma in the CIE L*a*b* color system and an absolute value of a chroma difference between the second color patch and the third color patch in the second scale are identical.

Fig. 1

**Description**

Technical Field

The present invention relates to a color chart for color selection, a method of generating a color chart for color selection, and a program of generating a color chart for color selection.

Background Art

Color charts for color selection including a plurality of color patches formed on the color charts for color selection are used for various color matchings. On such a color chart, for example, a plurality of color patches of which colors gradually change from a central color are arranged. A color selection method disclosed in PTL 1 includes specifying color comparison conditions for color charts and generating image data for printing from first to third color charts on which color patches of colors respectively corresponding to different variables of the specified color comparison conditions are formed to be adjacent to each other.

Citation List

Patent Literature

PTL 1: JP-A-2011-77937

Summary of Invention

Technical Problem

To generate color charts for color selection, the number of color patches, a color difference between the color patches, and the size of an area of colors covered by the color patches are required to be determined. For example, the color difference between the color patches is required to be increased or the size of the area of colors covered by the color patches is required to be reduced to reduce the number of color patches to easily find a target color. However, a large color difference between the color patches prevents a color close to the target color from being found in a case where the target color is a color between the color patches. Moreover, a small area of colors covered by the color patches prevents a color close to the target color from being found in a case where the target color is not included in the area. In this manner, there is a trade-off among the number of color patches, the color difference between the color patches, and the size of the area covering the colors.

Furthermore, in a case where the plurality of color patches are formed by changing the amounts of use of coloring materials (for example, ink) of C (cyan), M (magenta), Y (yellow), and K (black) used by a printer, the area covering the colors is four-dimensional, and thus the number of color patches is very large.

In view of the foregoing, an advantage of the present invention is to provide a color chart for color selection including efficiently arranged color patches, a method of generating the color chart for color selection, and a program of generating the color chart for color selection.

Solution to Problem

To achieve one of the above-described advantages, the present invention provides a color chart for color selection for selecting a color patch having a color closest to a specified color from a plurality of color patches, the color chart for color selection having an aspect, in which,

in the color chart for color selection, the plurality of color patches including a first color patch, a second color patch, and a third color patch arranged in order are formed, and

the color chart for color selection satisfies at least one of conditions (a) and (b) below:

(a) an absolute value of a lightness difference between the first color patch and the second color patch in a first scale that is perceptually more uniform than lightness in the International Commission on Illumination (CIE) L*a*b* color system and an absolute value of a lightness difference between the second color patch and the third color patch in the first scale are identical. (b) An absolute value of a chroma difference between the first color patch and the second color patch in a second scale that is perceptually more uniform than chroma in the CIE L*a*b* color system and an absolute value of a chroma difference between the second color patch and the third color patch in the second scale are identical.

Moreover, the present invention provides a color chart for color selection for selecting a color patch having a color closest to a specified color from a plurality of color patches, the color chart for color selection having an aspect, in which,
in the color chart for color selection, the plurality of color patches including a first color patch, a second color patch, and a third color patch arranged in order are formed, and
in the International Commission on Illumination (CIE) L*a*b* color system,
lightness of the second color patch is higher than lightness of the first color patch,
lightness of the third color patch is higher than the lightness of the second color patch, and
an absolute value of a lightness difference between the first color patch and the second color patch is greater than an absolute value of a lightness difference between the second color patch and the third color patch.

Furthermore, the present invention provides a color chart for color selection for selecting a color patch having a color closest to a specified color from a plurality of color patches, the color chart for color selection having an aspect, in which,
in the color chart for color selection, the plurality of color patches including a seventh color patch, an eighth color patch, and a ninth color patch arranged in order are formed, and
in the International Commission on Illumination (CIE) L*a*b* color system,
chroma of the eighth color patch is higher than chroma of the seventh color patch,
chroma of the ninth color patch is higher than the chroma of the eighth color patch, and
an absolute value of a chroma difference between the seven color patch and the eighth color patch is less than an absolute value of a chroma difference between the eighth color patch and the ninth color patch.

Furthermore, the present invention provides a method of generating a color chart for color selection for selecting a color patch having a color closest to a specified color from a plurality of color patches, the method having an aspect, in which
the plurality of color patches includes a first color patch, a second color patch, and a third color patch arranged in order, and
the method includes generating the color chart satisfying at least one of the above-described conditions (a) and (b).

Furthermore, the present invention provides a program for causing a computer to achieve a function of generating a color chart for color selection for selecting a color patch having a color closest to a specified color from a plurality of color patches, the program having an aspect, in which the plurality of color patches includes a first color patch, a second color patch, and a third color patch arranged in order, and
the program causes a computer to achieve a function of generating the color chart satisfying at least one of the above-described conditions (a) and (b) to be performed.

According to the above-described aspects, a color chart for color selection including efficiently arranged color patches, a method of generating the color chart for color selection, and a program of generating the color chart for color selection may be provided even in a case where the number of color patches or the area of the color chart is limited.

Brief Description of Drawings

Fig. 1 is a schematic view illustrating an example of a printed sheet of a color chart for color selection including a plurality of color patches arranged such that the color differences are perceptually more uniform than the CIE L*a*b* color system.
Fig. 2A is a schematic view illustrating an example of a principal part of a printed sheet on which a plurality of color patches are arranged such that lightness distances are perceptually uniform in an area of a lower lightness side, and Fig. 2B is a schematic view illustrating an example of a principal part of a printed sheet on which a plurality of color patches are arranged such that lightness distances are perceptually uniform in an area of a higher lightness side.
Fig. 3 is a schematic view illustrating an example of a principal part of a printed sheet on which a plurality of color patches are arranged such that chroma distances are perceptually uniform.
Fig. 4A is a graph illustrating an $L'-S_L$ curve, and Fig. 4B is a graph illustrating a $C'-S_C$ curve.
Fig. 5A is a graph illustrating an $L*-L_{00}$ curve, and Fig. 5B is a graph illustrating a $C*-C_{00}$ curve.
Fig. 6 schematically illustrates an example of color patches in coordinates $C*$ and $L*$ of the CIE L*a*b* color system and an example of color patches in coordinates $C_{00}$ and $L_{00}$ of an improved uniform color space.
Fig. 7A is a schematic view illustrating a relationship of a perceptually uniform lightness difference $\Delta L$ to lightness $L*$ in the CIE L*a*b* color space, and Fig. 7B is a schematic view illustrating a relationship of a perceptually uniform chroma difference $\Delta C$ to chroma $C*$ in the CIE L*a*b* color space.
Fig. 8 is a block diagram schematically illustrating a configuration example of a color adjusting apparatus.
Fig. 9 is a flowchart illustrating an example of a color adjustment process.
Fig. 10 is a schematic view illustrating a comparative example of a printed sheet of a color chart for color selection.

Fig. 11 schematically illustrates a comparative example of color patches in coordinates C* and L* of the CIE L*a*b* color system and a comparative example of color patches in coordinates $C_{00}$ and $L_{00}$ of an improved uniform color space.

Description of Embodiments

Herein, exemplary embodiments of the present invention will be described. Needless to say, the exemplary embodiments below illustrate but do not limit the present invention, and some features illustrated in the exemplary embodiments may not be solutions of the present invention.

(1) Summary of Technique:

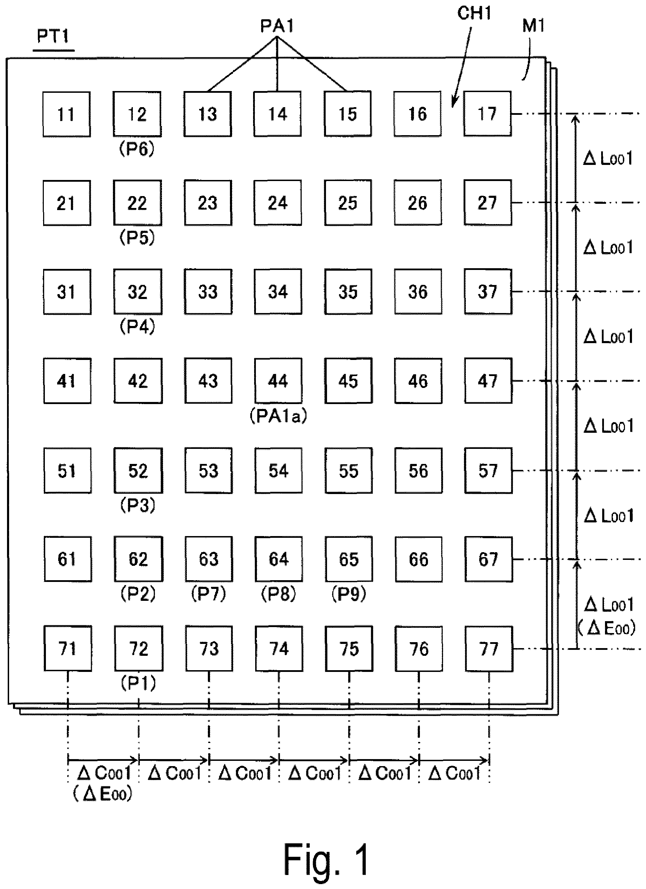

First, a summary of a technique included in the present invention will be described with reference to examples illustrated in Figs. 1 to 11. As Figs. 1 to 11 are schematic views illustrating examples, scales of directions illustrated in the drawings may vary, and may not match among the drawings.

[Aspect 1]

As illustrated in Figs. 1 to 3 and 6, a plurality of color patches PA1 including a first color patch P1, a second color patch P2, and a third color patch P3 arranged in order are formed on a color chart for color selection CH1 for selecting a color patch having a color closest to a specified color from the plurality of color patches PA1. The color chart for color selection CH1 satisfies at least one of conditions (a) and (b) below.

(a) An absolute value of a lightness difference (for example, $\Delta L_{00}1$) between the first color patch P1 and the second color patch P2 in a first scale (for example, lightness based on the CIEDE2000 color difference formula) perceptually more uniform than lightness in the CIE L*a*b* color system and an absolute value of a lightness difference (for example, $\Delta L_{00}1$) between the second color patch P2 and the third color patch P3 in the first scale are identical.
(b) An absolute value of a chroma difference (for example, $\Delta C_{00}1$) between the first color patch P1 and the second color patch P2 in a second scale (for example, chroma based on the CIEDE2000 color difference formula) perceptually more uniform than chroma in the CIE L*a*b* color system and an absolute value of a chroma difference (for example, $\Delta C_{00}1$) between the second color patch P2 and the third color patch P3 in the second scale are identical.

**As** described above, in a case where the plurality of color patches PA1 are formed by changing the amounts of use of CMYK (C, M, Y, and K) coloring materials, the area covering the colors is four-dimensional, and thus the number of color patches is very large. To improve this, the color patches may be arranged at regular intervals in the three-dimensional color space of the CIE L*a*b* color system defined by the International Commission on Illumination in 1976. Hereinafter, the CIE L*a*b* is also simply referred to as "Lab". However, studies after the definition have pointed out imperfections in the uniformity of the Lab color system.

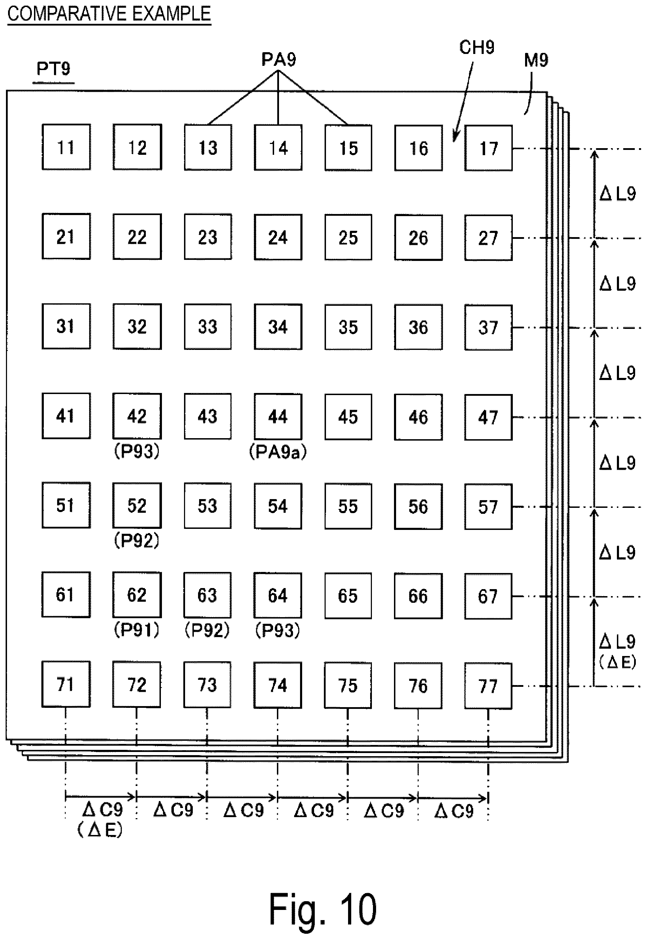

Fig. 10 schematically illustrates a printed sheet PT9 of a color chart for color selection CH9 including a plurality of color patches PA9 arranged such that color differences $\Delta E$ in the Lab color system are uniform in the comparative example. The color chart for color selection CH9 includes the color patches PA9 arranged lengthwise and widthwise, and is formed on a print substrate M9. The patches PA9 illustrated in Fig. 10 have identification numbers 11 to 77 assigned for convenience. On the color chart for color selection CH9 for selecting a color patch having a color closest to a specified color from the plurality of color patches PA9, the plurality of patches PA9 are arranged such that colors gradually change from a color of a patch PA9a at the center (identification number 44). In the example illustrated in Fig. 10, the patches PA9 are arranged such that lightness L* in the Lab color system increases from bottom to top by a lightness difference $\Delta L9$ ($\Delta L9 > 0$) and such that chroma C* in the Lab color system increases from left to right by a chroma difference $\Delta C9$ ($\Delta C9 = \Delta L9$). That is, the patches PA9 are arranged lengthwise at intervals of the lightness difference $\Delta L9$ and widthwise at intervals of the chroma difference $\Delta C9$. Here, the chroma C* represents a distance $\{(a^*)^2 + (b^*)^2\}^{1/2}$ from the origin (0, 0) in the a*-b* color coordinate plane of the Lab color system. The chroma difference $\Delta C9$ includes a difference in the color coordinate a* when the color coordinate b* does not change, a difference in the color coordinate b* when the color coordinate a* does not change, and the like.

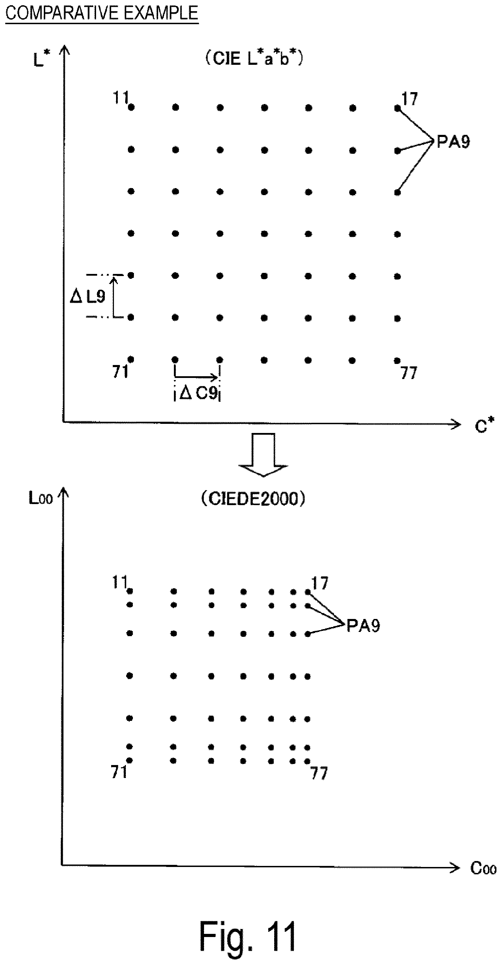

In the case where the color differences between the patches are fixed to the color differences $\Delta L9$ and $\Delta C9$ based on the Lab color system as illustrated in the upper part of Fig. 11, perceived color differences between the patches may not be constant as illustrated in the lower part of Fig. 11. Here, the upper part of Fig. 11 schematically illustrates an example of the color patches PA9 in the coordinates C* and L* of the Lab color system, and the lower part of Fig. 11 schematically illustrates an example of the color patches PA9 in the coordinates $C_{00}$ and $L_{00}$ of an improved uniform color space.

For example, color differences perceived by human beings in higher chroma are smaller than color differences perceived by human beings in lower chroma, and color differences perceived by human beings in a darker part or a brighter part are smaller than color differences perceived by human beings at around lightness $L^* = 50$. Thus, the perceived differences in color between the patches may be relatively small depending on the color areas, and it may take time to find a color closest to a target color. Moreover, in a case where the number of patches on the color chart is limited, the area covering the colors, which all the patches can present, becomes small.

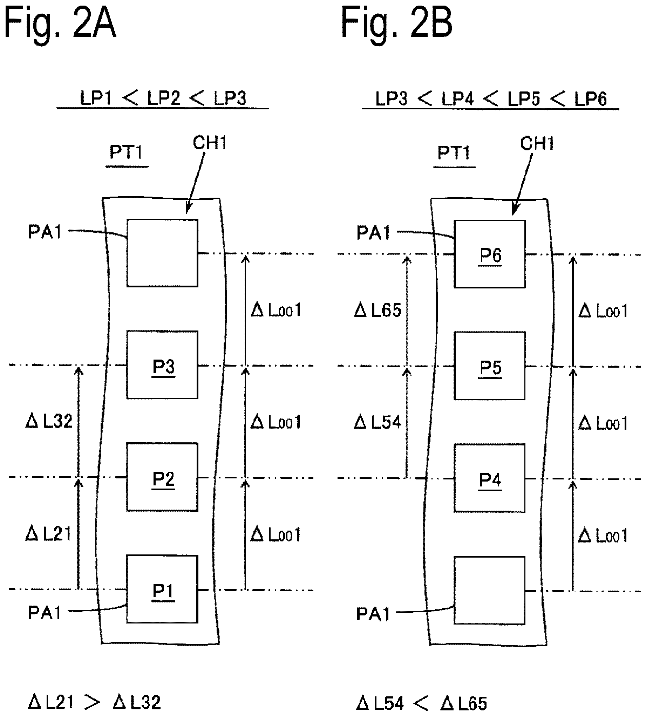

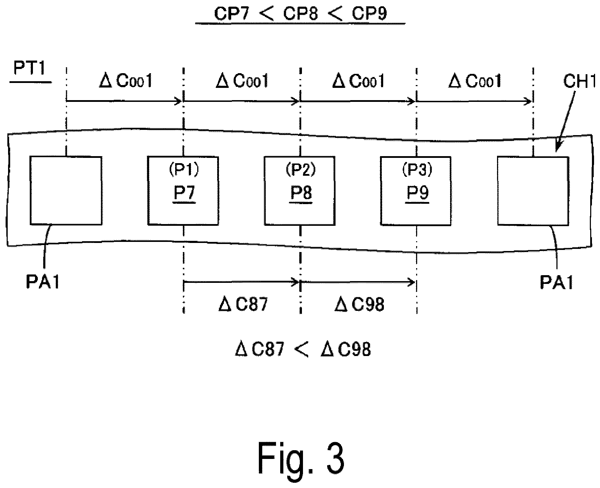

On the other hand, in the above-described Aspect 1 of this technique, the plurality of color patches PA1 are formed such that the absolute values of the color differences between the color patches in the scales perceptually more uniform than the Lab color system are identical, as illustrated in Figs. 1 to 3 and 6. In the example illustrated in Fig. 1, the color patches PA1 are arranged lengthwise at intervals of a lightness difference $\Delta L_{00}1$ ($\Delta L_{00}1 > 0$) in the improved uniform color space and widthwise at intervals of a chroma difference $\Delta C_{00}1$ ($\Delta C_{00}1 > 0$) in the improved uniform color space. Fig. 2A illustrates an example satisfying the above-described condition (a). In the example illustrated in Fig. 2A, the patches PA1 are arranged lengthwise at intervals of the lightness difference $\Delta L_{00}1$. In this example, the absolute value of the lightness difference between the first color patch P1 and the second color patch P2 in the first scale that is perceptually more uniform than the lightness $L^*$ in the Lab color system is $\Delta L_{00}1$, and the absolute value of the lightness difference between the second color patch P2 and the third color patch P3 in the first scale is also $\Delta L_{00}1$. Fig. 3 illustrates an example satisfying the above-described condition (b). Note that the reference signs of the first color patch P1, the second color patch P2, and the third color patch P3 that apply to the condition (b) are put in parentheses in Fig. 3. In the example illustrated in Fig. 3, the patches PA1 are arranged widthwise at intervals of the chroma difference $\Delta C_{00}1$. In this example, the absolute value of the chroma difference between the first color patch P1 and the second color patch P2 in the second scale that is perceptually more uniform than the chroma $C^*$ in the Lab color system is $\Delta C_{00}1$, and the absolute value of the chroma difference between the second color patch P2 and the third color patch P3 in the second scale is also $\Delta C_{00}1$.

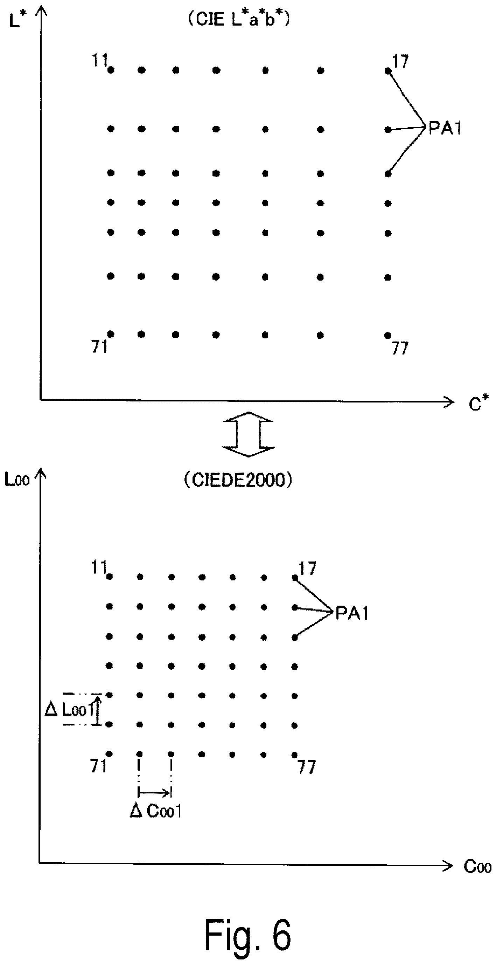

Thus, the perceived color differences between the color patches are substantially constant as illustrated in the lower part of Fig. 6, and the time to find a color closest to a target color is shortened. Moreover, even in a case where the number of color patches on the color chart CH1 is limited, the perceptual color differences are not small in the area where the perceived color differences between the color patches are relatively small in the Lab color space. Thus, the area covering the colors, which all the color patches can present, can be expanded in this aspect. Consequently, according to this aspect, a color chart for color selection including efficiently arranged color patches is provided even in a case where the number of color patches or the area of the color chart is limited. According to a test, the number of color charts for color selection and the number of times the color chart for color selection was generated has dropped to half compared with the case based on the Lab color system, resulting in resource savings. Moreover, the number of man-hours (time) to select a color targeted by a user is reduced compared with the case based on the Lab color system, resulting in greater efficiency.

Here, it is advantageous that the first scale be the lightness based on the improved uniform color space. The improved uniform color space includes uniform color spaces based on color difference formulas such as CIEDE2000, CMC, and CIEDE94 defined by the "Colour Measurement Committee of the Society of Dyers and Colourists (CIE)". The first scale may be improved lightness values obtained by correcting the lightness in the CIE L*a*b* color space defined by the CIE using the color difference formulas such as CIEDE2000, CMC, and CIEDE94. It is advantageous that the second scale be the chroma based on the improved uniform color space. The second scale may be improved chroma values obtained by correcting the lightness in the CIE L*a*b* color space using the color difference formulas such as CIEDE2000, CMC, and CIEDE94. Each of the color difference formulas is designed to be close to human perception.

The color chart for color selection may be formed on media such as print substrates, or may be displayed on a display device.

The first color patch, the second color patch, and the third color patch in the above-described Aspect 1 may be any three color patches selected from the plurality of color patches regardless of the direction of the arrangement. Consequently, as illustrated in the parentheses in Fig. 3, a color patch P7 may be applied to the first color patch P1 in Aspect 1, a color patch P8 may be applied to the second color patch P2 in Aspect 1, and a color patch P9 may be applied to the third color patch P3 in Aspect 1.

[Aspect 2]

On the color chart for color selection CH1 illustrated in Fig. 2A, in the CIE L*a*b* color system,
lightness LP2 of the second color patch P2 is higher than lightness LP1 of the first color patch P1,
lightness LP3 of the third color patch P3 is higher than lightness LP2 of the second color patch P2, and
the absolute value of the lightness difference between the first color patch P1 and the second color patch P2 is greater than the absolute value of the lightness difference between the second color patch P2 and the third color patch P3.

In the example illustrated in Fig. 2A, the absolute value of the lightness difference between the first color patch P1 and the second color patch P2 in the Lab color system is ΔL21 (ΔL21 > 0), the absolute value of the lightness difference between the second color patch P2 and the third color patch P3 in the Lab color system is ΔL32 (ΔL32 > 0), and ΔL21 > ΔL32. This enables the lightness differences between the color patches to be perceptually more uniform than the lightness L* in the Lab color system. In a case where the perceived lightness differences between the color patches are substantially constant, the time to find a color patch having a lightness closest to the target lightness is shortened. Moreover, even in the case where the number of color patches on the color chart CH1 is limited, the perceptual lightness differences are not small in the area where the perceived lightness differences between the color patches are relatively small in the Lab color space. Thus, the area covering the lightness, which all the color patches can present, can be expanded in this aspect. Consequently, according to this aspect, a color chart for color selection including efficiently arranged color patches is provided even in the case where the number of color patches or the area of the color chart is limited.

[Aspect 3]

As illustrated in Fig. 2B, the plurality of color patches PA1 may include a fourth color patch P4, a fifth color patch P5, and a sixth color patch P6 arranged in order.
On the color chart for color selection CH1, in the CIE L*a*b* color system,
lightness LP4 of the fourth color patch P4 may be higher than lightness LP3 of the third color patch P3,
lightness LP5 of the fifth color patch P5 may be higher than lightness LP4 of the fourth color patch P4,
lightness LP6 of the sixth color patch P6 may be higher than lightness LP5 of the fifth color patch P5, and
an absolute value of a lightness difference between the fourth color patch P4 and the fifth color patch P5 may be less than an absolute value of a lightness difference between the fifth color patch P5 and the sixth color patch P6.
In the example illustrated in Fig. 2B, the absolute value of the lightness difference between the fourth color patch P4 and the fifth color patch P5 in the Lab color system is ΔL54 (ΔL54 > 0), the absolute value of the lightness difference between the fifth color patch P5 and the sixth color patch P6 in the Lab color system is ΔL65 (ΔL65 > 0), and ΔL54 < ΔL65. This enables the lightness differences between the color patches in an area of a higher lightness side to be perceptually more uniform than the lightness L* in the Lab color system. In the case where the perceived lightness differences between the color patches are substantially constant, the time to find a color patch having a lightness closest to the target lightness is shortened. Moreover, even in the case where the number of color patches on the color chart CH1 is limited, the perceptual lightness differences are not small in the area where the perceived lightness differences between the color patches are relatively small in the Lab color space. Thus, the area covering the lightness, which all the color patches can present, can be expanded in this aspect. Consequently, according to this aspect, a color chart for color selection including color patches arranged more efficiently is provided even in the case where the number of color patches or the area of the color chart is limited.

[Aspect 4]

As illustrated in Fig. 3, the plurality of color patches PA1 including the seventh color patch P7, the eighth color patch P8, and the ninth color patch P9 arranged in order are formed on the color chart for color selection CH1 for selecting a color patch having a color closest to a specified color from the plurality of color patches PA1.
On the color chart for color selection CH1 illustrated in Fig. 3, in the CIE L*a*b* color system,
chroma CP8 of the eighth color patch P8 is higher than chroma CP7 of the seventh color patch P7,
chroma CP9 of the ninth color patch P9 is higher than chroma CP8 of the eighth color patch P8, and
an absolute value of a chroma difference between the seventh color patch P7 and the eighth color patch P8 is less than an absolute value of a chroma difference between the eighth color patch P8 and the ninth color patch P9.
In the example illustrated in Fig. 3, the absolute value of the chroma difference between the seventh color patch P7 and the eighth color patch P8 in the Lab color system is ΔC87 (ΔC87 > 0), the absolute value of the chroma difference between the eighth color patch P8 and the ninth color patch P9 in the Lab color system is ΔC98 (ΔC98 > 0), and ΔC87 < ΔC98. This enables the chroma differences between the color patches to be perceptually more uniform than the chroma C* in the Lab color system. In a case where the perceived chroma differences between the color patches are substantially constant, the time to find a color patch having a chroma closest to the target chroma is shortened. Moreover, even in the case where the number of color patches on the color chart CH1 is limited, the perceptual chroma differences are not small in the area where the perceived chroma differences between the color patches are relatively small in the Lab color space. Thus, the area covering the chroma, which all the color patches can present, can be expanded in this aspect. Consequently, according to this aspect, a color chart for color selection including efficiently arranged color patches is provided even in the case where the number of color patches or the area of the color chart is limited.
The patches P1 to P9 are applied to the patches at positions illustrated in Figs. 1 to 3 by way of example, and may be applied to patches at various positions.

**EP 3 424 735 A1**

[Aspect 5]

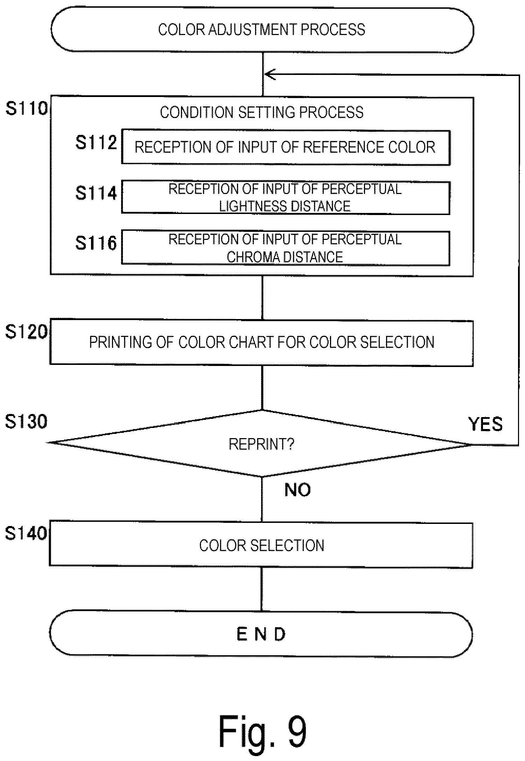

As illustrated in Fig. 9 and the like, a method of generating the color chart for color selection CH1 for selecting a color patch having a color closest to a specified color from the plurality of color patches PA1 including the first color patch P1, the second color patch P2, and the third color patch P3 arranged in order generates the color chart for color selection CH1 to satisfy at least one of the above-described conditions (a) and (b). In this aspect, a method of generating a color chart for color selection including efficiently arranged color patches can be provided even in the case where the number of color patches or the area of the color chart is limited.

[Aspect 6]

The lightness in the first scale may be the lightness in a color space perceptually more uniform than the CIE L*a*b* color system. The chroma in the second scale may be the chroma in a color space perceptually more uniform than the CIE L*a*b* color system. According to this aspect, a method of generating a color chart for color selection including color patches arranged more efficiently is provided even in the case where the number of color patches or the area of the color chart is limited.
Here, the color space perceptually more uniform than the CIE L*a*b* color system includes the improved uniform color space based on CIEDE2000, the improved uniform color space based on the CMC, the improved uniform color space based on the CIEDE94, and the like.

[Aspect 7]

As illustrated in Fig. 9 and the like, the method of generating the color chart for color selection CH1 may receive an input of an absolute value of a lightness difference in the first scale, and may form the plurality of color patches PA1 such that an absolute value of a lightness difference between the first color patch P1 and the second color patch P2 in the first scale and an absolute value of a lightness difference between the second color patch P2 and the third color patch P3 in the first scale are identical to the absolute value of the lightness difference received. According to this aspect, the absolute value of the lightness difference between the first color patch P1 and the second color patch P2 in the first scale and the absolute value of the lightness difference between the second color patch P2 and the third color patch P3 in the first scale can be adjusted. Thus, a method of generating a color chart for color selection including color patches arranged more efficiently is provided even in the case where the number of color patches or the area of the color chart is limited.

[Aspect 8]

As illustrated in Fig. 9 and the like, the method of generating the color chart for color selection CH1 may receive an input of an absolute value of a chroma difference in the second scale, and may form the plurality of color patches PA1 such that an absolute value of a chroma difference between the first color patch P1 and the second color patch P2 in the second scale and an absolute value of a chroma difference between the second color patch P2 and the third color patch P3 in the second scale are identical to the absolute value of the chroma difference received. According to this aspect, the absolute value of the chroma difference between the first color patch P1 and the second color patch P2 in the second scale and the absolute value of the chroma difference between the second color patch P2 and the third color patch P3 in the second scale can be adjusted. Thus, a method of generating a color chart for color selection including color patches arranged more efficiently is provided even in the case where the number of color patches or the area of the color chart is limited.

[Aspect 9]

In addition, at least one of the number of times the color chart for color selection is generated and the number of color charts for color selection is generated until finding a color patch of a target color may be reduced by generating the color chart for color selection CH1 to satisfy at least one of the above-described conditions (a) and (b) compared with a case where the color chart for color selection is generated to satisfy a condition (c) below when the above-described condition (a) is satisfied and to satisfy a condition (d) below when the above-described condition (b) is satisfied.

(c) The absolute value of the lightness difference between the first color patch (for example, a patch P91 illustrated in Fig. 10) and the second color patch (for example, a patch P92 with an identification number 52) in the CIE L*a*b* color system and the absolute value of the lightness difference between the second color patch (for example, the patch P92 with the identification number 52) and the third color patch (for example, a patch P93 with an identification number 42) in the CIE L*a*b* color system are identical.

(d) The absolute value of the chroma difference between the first color patch (for example, the patch P91) and the second color patch (for example, the patch P92 with an identification number 63) in the CIE L*a*b* color system and the absolute value of the chroma difference between the second color patch (for example, the patch P92 with the identification number 63) and the third color patch (for example, the patch P93 with an identification number 64) in the CIE L*a*b* color system are identical.

[Aspect 10]

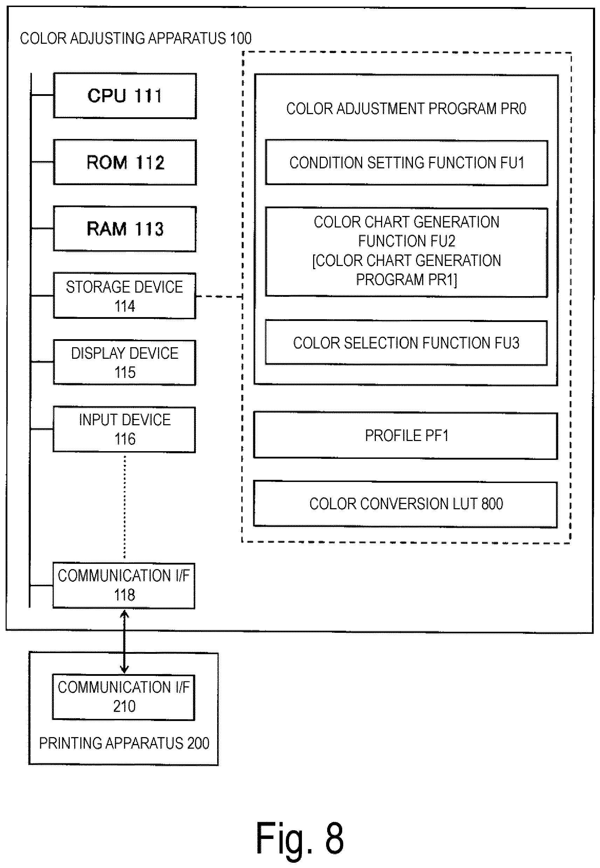

As illustrated in Fig. 8 and the like, a program PR1 of generating a color chart for color selection causes a computer to achieve a function of generating the color chart for color selection CH1 for selecting a color patch having a color closest to a specified color from the plurality of color patches PA1 including the first color patch P1, the second color patch P2, and the third color patch P3 arranged to satisfy at least one of the above-described conditions (a) and (b). According to this aspect, a program of generating a color chart for color selection including efficiently arranged color patches is provided even in the case where the number of color patches or the area of the color chart is limited.

In addition, this technique is applicable to devices configured to generate color charts for color selection, combined apparatuses including the devices, methods of controlling the devices and the apparatuses, programs of controlling the devices and the apparatuses, programs of generating color charts for color selection, computer-readable media storing the control programs, and the like. A plurality of separate parts may constitute the above-described devices and apparatuses.

(2) Specific Example of Color Chart for Color Selection:

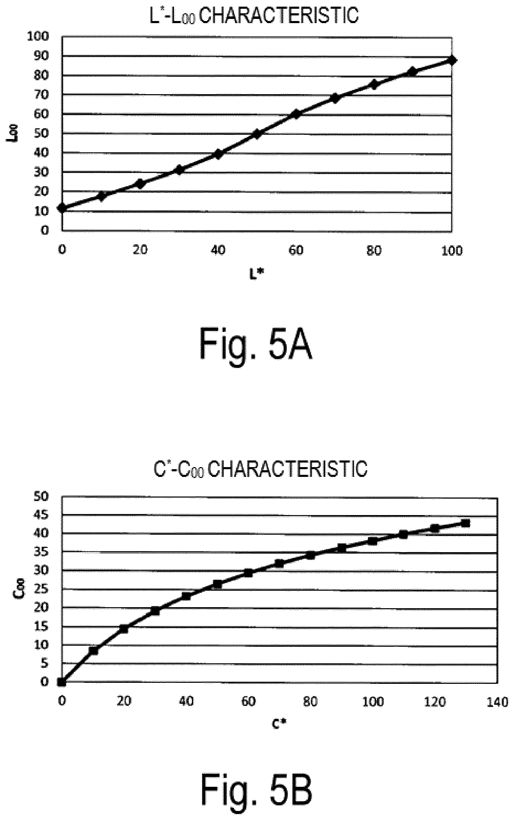

Fig. 1 schematically illustrates a printed sheet PT1 of the color chart for color selection CH1 for selecting a color patch having a color closest to a specified color from the plurality of color patches PA1 as an example of a color chart for color selection. The patches are also referred to as "color chips". The plurality of color patches PA1 illustrated in Fig. 1 are arranged lengthwise and widthwise such that color differences $\Delta E_{00}$ expressed by the color difference formula CIEDE2000 are uniform on a print substrate M1. In this example, the improved uniform color space based on CIEDE2000 is a color space perceptually more uniform than the Lab color system, and the lightness differences $\Delta L_{00}1$ and the chroma differences $\Delta C_{00}1$ correspond to the color differences $\Delta E_{00}$ in the improved uniform color space based on CIEDE2000. Moreover, as illustrated in Fig. 5A, the lightness in the improved uniform color space based on CIEDE2000 is expressed as $L_{00}$, and the chroma in the improved uniform color space based on CIEDE2000 is expressed as $C_{00}$ as illustrated in Fig. 5B.

The patches PA1 illustrated in Fig. 1 have identification numbers 11 to 77 assigned for convenience. On the color chart for color selection CH1 formed on the print substrate M1, the plurality of color patches PA1 are arranged such that colors gradually change from a color of a patch PA1a at the center (identification number 44). The lightness and the chroma of the color patches PA1 illustrated in Fig. 1 are changed in an identical hue. In the example illustrated in Fig. 1, the patches PA1 are arranged such that the lightness $L_{00}$ in the improved uniform color space increases from bottom to top by a lightness difference $\Delta L_{00}1$ ($\Delta L_{00}1 > 0$) and such that the chroma $C_{00}$ in the improved uniform color space increases from left to right by a chroma difference $\Delta C_{00}1$ ($\Delta C_{00}1 = \Delta L_{00}1$). That is, the patches PA1 are arranged lengthwise at intervals of the lightness difference $\Delta L_{00}1$ and widthwise at intervals of the chroma difference $\Delta C_{00}1$.

Thus, the color chart for color selection CH1 satisfies the above-described condition (a) when the three consecutive patches PA1 arranged lengthwise are the first color patch P1, the second color patch P2, and the third color patch P3 in this order. For example, when the patch PA1 with an identification number 72 is applied to the first color patch P1, the patch PA1 with an identification number 62 is applied to the second color patch P2, and the patch PA1 with an identification number 52 is applied to the third color patch P3. The absolute value of the lightness difference between the first color patch P1 and the second color patch P2 in the lightness $L_{00}$ (example of the first scale) in the improved uniform color space and the absolute value of the lightness difference between the second color patch P2 and the third color patch P3 in the lightness $L_{00}$ in the improved uniform color space are both identical to $\Delta L_{00}1$.

Moreover, the color chart for color selection CH1 satisfies the above-described condition (b) when the three consecutive patches PA1 arranged widthwise are the first color patch P1, the second color patch P2, and the third color patch P3 in this order. For example, when the patch PA1 with an identification number 73 is applied to the first color patch P1, the patch PA1 with an identification number 74 is applied to the second color patch P2, and the patch PA1 with an identification number 75 is applied to the third color patch P3. The absolute value of the chroma difference between the first color patch P1 and the second color patch P2 in the chroma $C_{00}$ (example of the second scale) in the improved uniform color space and the absolute value of the chroma difference between the second color patch P2 and the third color patch P3 in the chroma $C_{00}$ in the improved uniform color space are both identical to $\Delta C_{00}1$.

Thus, a wider color area is covered with less patches compared with the case where the color patches are arranged at intervals of the color difference $\Delta E$ in the Lab color space, and the number of times the color chart is printed until finding a target color can be reduced.

Fig. 2A schematically illustrates a principal part of the printed sheet PT1 including an arrangement of the plurality of color patches PA1 expressing an idea of Aspect 2 along with the above-described condition (a) regarding lightness. On the color chart for color selection CH1 illustrated in Fig. 2A, the patches PA1 are arranged such that the lightness distances are perceptually uniform in an area of a lower lightness side where the lightness $L^*$ in the Lab color system is about 50 or less. The four patches PA1 illustrated in Fig. 2A respectively correspond to, for example, the patches with the identification numbers 72, 62, 52, and 42 illustrated in Fig. 1. In the example illustrated in Fig. 2A, the patches PA1 are arranged such that the lightness Loo in the improved uniform color space increases from bottom to top by the lightness difference $\Delta L_{00}1$. That is, the patches PA1 are arranged lengthwise at intervals of the lightness difference $\Delta L_{00}1$. When the lightnesses $L^*$ of the color patches P1, P2, and P3 in the Lab color system are respectively expressed as LP1, LP2, and LP3, then LP1 < LP2 < LP3. The lightness LP1 is advantageously, but not limited to, zero or greater, and less than 50. The lightness LP3 is advantageously, but not limited to, greater than zero, and 50 or less.

A feature of the color chart CH1 illustrated in Fig. 2A is that the absolute value $\Delta L21$ of the lightness difference between the color patches P1 and P2 is greater than the absolute value $\Delta L32$ of the lightness difference between the color patches P2 and P3.

Fig. 2B schematically illustrates a principal part of the printed sheet PT1 including an arrangement of the plurality of color patches PA1 expressing an idea of Aspect 3 along with the above-described condition (a) regarding lightness. On the color chart for color selection CHln illustrated in Fig. 2B, the patches PA1 are arranged such that the lightness distances are perceptually uniform in an area of a higher lightness side where the lightness $L^*$ in the Lab color system is about 50 or greater. In the example illustrated in Fig. 2B, the patches PA1 are arranged such that the lightness $L_{00}$ in the improved uniform color space increases from bottom to top by the lightness difference $\Delta L_{00}1$. That is, the patches PA1 are arranged lengthwise at intervals of the lightness difference $\Delta L_{00}1$. When the lightnesses $L^*$ of the color patches P4, P5, and P6 in the Lab color system are respectively expressed as LP4, LP5, and LP6, then LP3 < LP4 < LP5 < LP6. The lightness LP6 is advantageously, but not limited to, greater than 50. The lightness LP4 is advantageously, but not limited to, 50 or greater.

A feature of the color chart CH1 illustrated in Fig. 2A is that the absolute value $\Delta L54$ of the lightness difference between the color patches P4 and P5 is less than the absolute value $\Delta L65$ of the lightness difference between the color patches P5 and P6.

Fig. 3 schematically illustrates a principal part of the printed sheet PT1 including a row of the plurality of color patches PA1 expressing an idea of Aspect 4 along with the above-described condition (b) regarding chroma. On the color chart for color selection CH1 illustrated in Fig. 3, the patches PA1 are arranged such that the chroma distances are perceptually uniform. In the example illustrated in Fig. 3, the patches PA1 are arranged such that the chroma $C_{00}$ in the improved uniform color space increases from left to right by the chroma difference $\Delta C_{00}1$. That is, the patches PA1 are arranged widthwise at intervals of the chroma difference $\Delta L_{00}1$. When the chroma $C^*$ of the color patches P7, P8, and P9 in the Lab color system are respectively expressed as LP7, LP8, and LP9, then LP7 < LP8 < LP9.

A feature of the color chart CH1 illustrated in Fig. 3 is that an absolute value $\Delta C87$ of the chroma difference between the color patches P7 and P8 is less than an absolute value $\Delta C98$ of the chroma difference between the color patches P8 and P9.

When the color patch P7 is applied to the first color patch P1 in Aspect 1, the color patch P8 is applied to the second color patch in Aspect 1, and the color patch P9 is applied to the third color patch P3 in Aspect 1, the above-described condition (b) regarding chroma is satisfied.

(3) How to Derive Improved Uniform Color Space and Example of Method of Generating Color Chart for Color Selection:

Next, how the improved uniform color space based on CIEDE2000 is derived will be described.

The chroma c* in the Lab color space is given by the equation

$$c^* = \{(a^*)^2 + (b^*)^2\}^{1/2},$$

where $L^*$, $a^*$, and $b^*$ are the coordinate values in the Lab color space. The coordinate values $L_{uniform}$, $A_{uniform}$, and $B_{uniform}$ in the improved uniform color space can be calculated as follows.

[Equation 1]

$$L_{uniform} = f_L(L*) \quad \cdots \quad (1)$$

[Equation 2]

$$A_{uniform} = C_{uniform} \times \cos(H_{uniform}) \quad \cdots \quad (2)$$

[Equation 3]

$$B_{uniform} = C_{uniform} \times \sin(H_{uniform}) \quad \cdots \quad (3)$$

Chroma $C_{uniform}$ and hue H in the improved uniform color space can be expressed by the following equations.
[Equation 4]

$$C_{uniform} = f_C(c*) \quad \cdots \quad (4)$$

[Equation 5]

$$H_{uniform} = atan2\left(\frac{b*}{a*}\right) \bmod 360° \quad \cdots \quad (5)$$

Here, atan2 is a function returning the arc tangent of a color coordinate (a*, b*), and mod is a function returning the remainder after a numerical value is divided by a devisor.
Functions $f_L$ and $f_C$ are determined in the following steps.
First, the color difference $\Delta E_{00}$ by the color difference formula CIEDE2000 is expressed by the following equation.
[Equation 6]

$$\Delta E_{00} = \sqrt{\left(\frac{\Delta L'}{k_L S_L}\right)^2 + \left(\frac{\Delta C'}{k_C S_C}\right)^2 + \left(\frac{\Delta H'}{k_H S_H}\right)^2 + R_T \left(\frac{\Delta C'}{k_C S_C}\right) \left(\frac{\Delta H'}{k_H S_H}\right)} \quad \cdots \quad (6)$$

A weighting factor $S_L$ for lightness and a weighting factor Sc for chroma are expressed by the following equations.
[Equation 7]

$$S_L = 1 + \frac{0.015 \cdot (\overline{L'} - 50)^2}{\sqrt{20 + (\overline{L'} - 50)^2}} \quad \cdots \quad (7)$$

[Equation 8]

$$S_C = 1 + 0.045\overline{C'} \quad \cdots \quad (8)$$

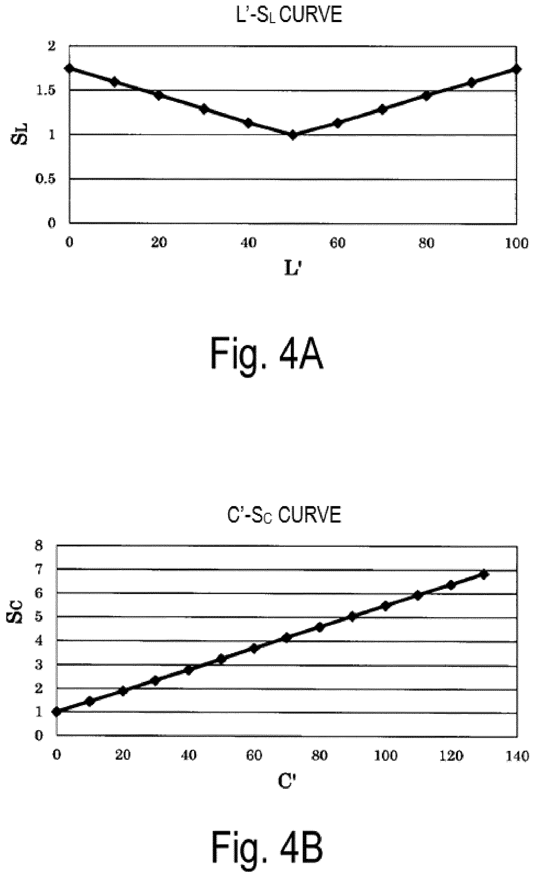

Fig. 4A illustrates an L'-$S_L$ curve by Equation (7), and Fig. 4B illustrates a C'-Sc curve by Equation (8).
$S_L$ is the weighting factor for $\Delta L'$ during the color difference calculation, and Sc is the weighting factor for $\Delta C'$ during the color difference calculation. The weighting factor $S_L$ is designed such that $\Delta L'$ decreases as L' separates from 50. The weighting factor SC is designed such that $\Delta C'$ decreases as $C'$ increases.

Thus, lightness $L_{uniform}$ and the chroma $C_{uniform}$ can be expressed by the following equations.

[Equation 9]

$$L_{uniform} = f_L(L*) = L* \cdot \int_0^{L*} \frac{1}{S_L} dL = L* \cdot \int_0^{L*} \frac{1}{1 + \dfrac{0.015 \cdot (L*-50)^2}{\sqrt{20 + (L*-50)^2}}} dL \quad \cdots (9)$$

[Equation 10]

$$C_{uniform} = f_C(C*) = C* \cdot \int_0^{C*} \frac{1}{S_C} dC = C* \cdot \int_0^{C*} \frac{1}{1 + 0.045C*} dC = C* \frac{\log(1 + 0.045C*)}{2} \cdots (10)$$

Here, a transform function from the coordinate values in the Lab color space to the coordinate values in the improved uniform color space is expressed by $f_{uniform}$, and the inverse transform function is expressed by $f^{-1}_{uniform}$. Since the equation of the inverse transform function $f^{-1}_{uniform}$ cannot be determined, a function can be created using polynomial approximation. Needless to say, the transform function $f_{uniform}$ may also be formed using polynomial approximation.

Fig. 5A illustrates an $L*$-$L_{00}$ characteristic expressing the correspondence relationship between the lightness $L*$ in the Lab color space and the lightness $L_{00}$ in the improved uniform color space. This $L*$-$L_{00}$ characteristic exhibits an S shape having the steepest slope at $L* = 50$ and the smallest slopes at $L* = 0$ and $L* = 100$.

Moreover, Fig. 5B illustrates a $C*$-$C_{00}$ characteristic expressing the correspondence relationship between the chroma $C*$ in the Lab color space and the chroma $C_{00}$ in the improved uniform color space. This $C*$-$C_{00}$ characteristic exhibits a slope that becomes smaller as the chroma $C*$ increases.

Next, the method of generating the color chart for color selection using the improved uniform color space will be described in the following steps 1 to 5. Here, a printing apparatus is a printer using coloring materials (for example, ink) of C (cyan), M (magenta), Y (yellow), and K (black). It is assumed that the printer prints based on original data indicating the amounts of use of CMYK (C, M, Y, and K), and that the original data is created to be printed on a print target (Japan Color). An ICC profile is used for color conversion.

(Step 1) First, based on the original data ($C_{org}$, $M_{org}$, $Y_{org}$, $K_{org}$) indicating the colors of an original to be printed, the coordinate values ($L_p$, $a_p$, $b_p$) in the Lab color space to be output by a printer are determined by the following equation.

[Equation 11]

$$\left(L_p, a_p, b_p\right)$$
$$= f_{ICC}\left(Printer.icc, A2B, f_{ICC}\left(Printer.icc, B2A, f_{ICC}(JapanColor.icc, A2B, C_{org} M_{org} Y_{org} K_{org})\right)\right)$$
$$\cdots (11)$$

Here, function ficc is a function converting colors with reference to an ICC profile, and the three arguments have meanings as follows.

The first argument represents the name of the profile.

The second argument represents the direction of color conversion. When the second argument is "A2B", the CMYK values serving as device colors are converted into the Lab values serving as non-device-dependent colors. When the second argument is "B2A", the Lab values serving as the non-device-dependent colors are converted into the CMYK values serving as the device colors.

The third argument represents the input color values.

(Step 2) Next, based on the coordinate values ($L_p$, $a_p$, $b_p$) of the colors to be output by the printer, the color values ($L_{p-uniform}$, $a_{p-uniform}$, $b_{p-uniform}$) in the improved uniform color space are determined by the following equation.

[Equation 12]

$$\left(L_{p-uniform}, a_{p-uniform}, b_{p-uniform}\right) = f_{uniform}\left(L_p, a_p, b_p\right) \quad \cdots (12)$$

Here, let the color values of a reference color of the color chart for color selection CH1 be ($L_{p-uniform}$, $a_{p-uniform}$, $b_{p-uniform}$).

(Step 3) With the reference color ($L_{p-uniform}$, $a_{p-uniform}$, $b_{p-uniform}$) of the color chart CH1 as a center, the lightness $L_{uniform}$ is increased and decreased from the reference lightness $L_{p-uniform}$ for $\pm N_L$ ($N_L$ is an integer greater than or equal to 1) steps, the color coordinate $a_{uniform}$ is increased and decreased from the reference color coordinate $a_{p-uniform}$ for $\pm Na$ (Na is an integer greater than or equal to 1) steps, and the color coordinate $b_{uniform}$ is increased and decreased from the reference color coordinate $b_{p-uniform}$ for $\pm N_b$ ($N_b$ is an integer greater than or equal to 1) steps. Moreover, the lightness difference (color difference) between adjacent color patches in the direction of the lightness $L_{uniform}$ is defined as $\Delta L_{00}1$, the color difference between adjacent color patches in the direction of the color coordinate auniform is defined as $\Delta a_{00}1$ (example of the color difference $\Delta C_{00}1$ illustrated in Fig. 1 and the like), the color difference between adjacent color patches in the direction of the color coordinate buniform is defined as $\Delta b_{00}1$ (example of the color difference $\Delta C_{00}1$ illustrated in Fig. 1 and the like), and $\Delta L_{00}1 = \Delta a_{00}1 = \Delta b_{00}1$. The total number of color patches PA1 is $(2N_L + 1)(2N_a + 1)(2N_b + 1)$.

(Step 4) The color values ($L_{uniform}$, $A_{uniform}$, $B_{uniform}$) of the color patches PA1 in the uniform color space are converted into the original data (Cp, Mp, Yp, Kp) indicating the device colors by the following equation.
[Equation 13]

$$\left(C_p, M_p, Y_p, K_p\right) = f_{ICC}\left(Printer.icc, B2A, f_{uniform}^{-1}\left(L_{uniform}, a_{uniform}, b_{uniform}\right)\right) \quad \cdots(13)$$

(Step 5) The color chart for color selection CH1 as illustrated in Fig. 1 and the like is printed by the printer based on the original data (Cp, Mp, Yp, Kp). This enables the color chart CH1 including the color patches PA1 of the total number $(2N_L + 1)(2N_a + 1)(2N_b + 1)$ to be formed on the print substrate M1.

Fig. 6 schematically illustrates examples of the color patches PA1 generated using the above-described method of generating the color chart for color selection in the coordinates C* and L* of the Lab color system and in the coordinates $C_{00}$ and $L_{00}$ of the improved uniform color space by CIEDE2000. As illustrated in the lower part of Fig. 6, the color patches PA1 are uniformly arranged at intervals of the lightness difference $\Delta L_{00}1$ in the direction of the lightness $L_{00}$ and at intervals of the chroma difference $\Delta C_{00}1$ in the direction of the chroma $C_{00}$. As illustrated in the upper part of Fig. 6, the intervals between the color patches in the Lab color space are nonuniform both in the direction of the lightness L* and in the direction of the chroma C*.

As illustrated in Fig. 5A, the slope of the L*-$L_{00}$ characteristic is the steepest at L* = 50, gradually becomes smaller from L* = 50 toward L* = 0, and gradually becomes smaller from L* = 50 toward L* = 100. This means that, when the color patches PA1 are arranged at intervals of the lightness difference $\Delta L_{00}1$ in the improved uniform color space, the lightness difference $\Delta L$ in the Lab color space is smallest at L* = 50, the lightness difference $\Delta L$ gradually increases from L* = 50 toward L* = 0, and the lightness difference $\Delta L$ gradually increases from L* = 50 toward L* = 100. Since the weighting factor $S_L$ illustrated in Fig. 4A is used to calculate the color difference with respect to $\Delta L'$, the lightness difference $\Delta L$ in the Lab color space decreases as the weighting factor $S_L$ increases.

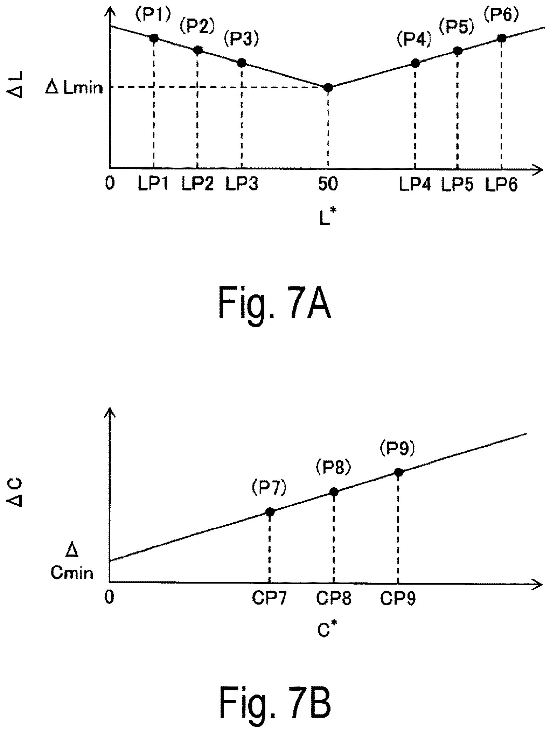

The relation of the perceptually uniform lightness difference $\Delta L$ to the lightness L* in the Lab color space is determined based on the description above, and is schematically illustrated in Fig. 7A. The perceptually uniform lightness difference $\Delta L$ is the smallest at L* = 50. The lightness difference at this point is expressed as $\Delta L$min. Fig. 7A also illustrates how the lightness of the color patches P1 to P6 illustrated in Figs. 2A and 2B relate to each other. As is also clear from Fig. 7A, the absolute value $\Delta L21$ of the lightness difference between the patches P1 and P2 in the Lab color system is greater than the absolute value $\Delta L32$ of the lightness difference between the patches P2 and P3 in the Lab color system, and the absolute value $\Delta L54$ of the lightness difference between the patches P4 and P5 in the Lab color system is less than the absolute value $\Delta L65$ of the lightness difference between the patches P5 and P6 in the Lab color system.

Moreover, as illustrated in Fig. 5B, the slope of the C*-$C_{00}$ characteristic gradually becomes smaller as the chroma C* increases. This means that, when the color patches PA1 are arranged at intervals of the chroma difference $\Delta C_{00}1$ in the improved uniform color space, the chroma difference $\Delta C$ in the Lab color space gradually increases as the chroma C* increases. Since the weighting factor Sc illustrated in Fig. 4B is used to calculate the color difference with respect to $\Delta C'$, the chroma difference $\Delta C$ in the Lab color space decreases as the weighting factor Sc increases.

The relation of the perceptually uniform chroma difference $\Delta C$ to the chroma C* in the Lab color space is determined based on the description above, and is schematically illustrated in Fig. 7B. The perceptually uniform chroma difference $\Delta C$ is smallest at C* = 0. The chroma difference at this point is expressed as $\Delta C$min. Fig. 7B also illustrates how the chroma of the color patches P7 to P9 illustrated in Fig. 3 relate to each other. As is also clear from Fig. 7B, the absolute value $\Delta C87$ of the chroma difference between the patches P7 and P8 in the Lab color system is less than the absolute value $\Delta C98$ of the chroma difference between the patches P8 and P9 in the Lab color system.

(4) Specific Example of Color Adjusting Apparatus:

Fig. 8 schematically illustrates a configuration example of a color adjusting apparatus performing the method of generating the color chart for color selection. A color adjusting apparatus 100 illustrated in Fig. 8 includes a central processing unit (CPU) 111, a read only memory (ROM) 112, a random access memory (RAM) 113, a storage device 114, a display device 115, an input device 116, a communication I/F (interface) 118, and the like coupled with each other to input and output information. The storage device 114 stores a color adjustment program PR0, a profile PF1, a color conversion look-up table (LUT) 800, and the like. The storage device 114 may be a nonvolatile semiconductor memory such as a flash memory, a magnetic storage device such as a hard disk, and the like. The display device 115 may be a liquid crystal display panel and the like. The input device 116 may be a touch panel adhered to a surface of the display panel, hardware keys including a keyboard, a pointing device, and the like. The communication I/F 118 is coupled with a communication I/F 210 of a printing apparatus 200, and inputs and outputs information to and from the printing apparatus 200. Standards such as a universal serial bus (USB) and near field communication may be used for the communication I/Fs 118 and 210. Communication through the communication I/Fs 118 and 210 may be wired or wireless. In addition, the communication may be over a network including a local area network (LAN) and the Internet.

The color adjusting apparatus 100 includes computers such as personal computers (including tablet terminals). The color adjusting apparatus 100 may be configured with the above-described components 111 to 118 in one housing, or may be configured with a plurality of separate devices capable of communicating with each other. This technique is also possible in a case where the printing apparatus is included in the color adjusting apparatus 100, or a printer having the printing function may perform the color adjustment process of this technique.

The printing apparatus 200 receives print data based on output images generated by the color adjusting apparatus 100, and forms print images corresponding to the output images on print substrates based on the print data. The printing apparatus 200 includes electrophotographic printers such as ink jet printers and laser printers, and also includes copiers, facsimiles, and multifunction printers having the functions of the copiers and facsimiles.

The color adjustment program PR0 illustrated in Fig. 8 causes the color adjusting apparatus 100 to perform a condition setting function FU1, a color chart generation function FU2, and a color selection function FU3. The color chart generation program PR1 of this specific example causes the color adjusting apparatus 100 to perform the color chart generation function FU2.

The profile PF1 is a color attribute file defining the correspondence relationship between input colors and output colors. The profile for the printing apparatus is prepared for each condition of use, for example, for each model of the printing apparatus, for each type of the print substrate, for each illuminant for visual observation, and the like since color correspondence relationship changes depending on the conditions of use, for example, the model of the printing apparatus, the type of the print substrate, the illuminant for visual observation, and the like. Moreover, since the color correspondence relationship may also change depending on coloring materials lots, a period of use of the printing apparatus, and the like, the profile may also be generated according to the above-described conditions of use. In a case where the printing apparatus uses coloring materials of CMYK, for example, the color values ($L^*$ value, $a^*$ value, and $b^*$ value) in the Lab color space are defined as the input colors, and values (C value, M value, Y value, and K value) indicating the amounts of use of the coloring materials of CMYK are defined as the output colors.

A color conversion LUT 800 defines, for example, the correspondence relationship between values indicating input colors of red, green, and blue (RGB) and values indicating the use amounts of the coloring materials of CMYK. The color conversion LUT 800 can be generated depending on the selected color patches PA1 to match colors using the printed color chart for color selection CH1.

(5) Specific Example of Color Adjustment Process:

Fig. 9 illustrates an example of the color adjustment process performed by the color adjusting apparatus 100 illustrated in Fig. 8. Here, Step S110 is an example corresponding to the condition setting function FU1, Step S120 is an example corresponding to the color chart generation function FU2, and Step S140 is an example corresponding to the color selection function FU3. Hereinafter, the description of "Step" will be omitted.

When the process starts, the color adjusting apparatus 100 performs a condition setting process to set various conditions (S110). The condition setting process includes a process of receiving input of the reference color ($L_{p-uniform}$, $a_{p-uniform}$, $b_{p-uniform}$)(S112), a process of receiving input of the perceptually uniform lightness distance $\Delta L_{00}1$ based on the improved uniform color space (S114), a process of receiving input of the perceptually uniform chroma distance $\Delta C_{00}1$ based on the improved uniform color space (S116), and the like. The process of receiving input of the conditions may be, for example, a process of receiving operations of a user using the input device 116. In a case where both the lightness distance $\Delta L_{00}1$ and the chroma distance $\Delta C_{00}1$ are set to the color difference $\Delta E_{00}$, the processes in S114 and S116 may be combined. The process in S114 is an example process of receiving input of the absolute values of the lightness differences in the first scale, and the process in S116 is an example process of receiving input of the absolute values of the chroma differences in the second scale.

After the condition setting process, the color adjusting apparatus 100 causes the printing apparatus 200 to print the color chart for color selection CH1 as illustrated in Fig. 1 based on the input conditions, for example, the reference color ($L_{p\text{-uniform}}$, $a_{p\text{-uniform}}$, $b_{p\text{-uniform}}$), the lightness distance $\Delta L_{00}1$, and the chroma distance $\Delta C_{00}1$ (S120). The colors of the color patches PA1 are changed by, for example, increasing and decreasing the lightness $L_{uniform}$ from the reference lightness $L_{p\text{-uniform}}$ by the lightness distance $\Delta L_{00}1$ for $\pm N_L$ steps, by increasing and decreasing the color coordinate $a_{uniform}$ from the reference color coordinate $a_{p\text{-uniform}}$ by a distance $\Delta a_{00}1 = \Delta C_{00}1$ for $\pm N_a$ steps, and by increasing and decreasing the color coordinate $b_{uniform}$ from the reference color coordinate $b_{p\text{-uniform}}$ by a distance $\Delta b_{00}1 = \Delta C_{00}1$ for $\pm N_b$ steps. To keep the color differences $\Delta E_{00}$ constant, it is advantageous that $\Delta L_{00}1$ be equal to $\Delta C_{00}1$. The color adjusting apparatus 100 converts the color values ($L_{uniform}$, $a_{uniform}$, $b_{uniform}$) of the color patches PA1 in the uniform color space into the original data ($C_p$, $M_p$, $Y_p$, $K_p$) by the above-described Equation (13). The printing apparatus 200 then prints the color chart CH1 based on the original data ($C_p$, $M_p$, $Y_p$, $K_p$). In this manner, the color chart CH1 including the total number ($2N_L + 1$)($2N_a + 1$)($2N_b + 1$) of color patches PA1 is formed on the print substrate M1.

Thus, the plurality of color patches PA1 are formed such that, in the arrangement of the patches of which lightness is changed in order, the absolute value of the lightness difference between the patches P1 and P2 in the improved uniform color space (first scale) and the absolute value of the lightness difference between the patches P2 and P3 in the improved uniform color space (first scale) are identical to the absolute value of the lightness difference $\Delta L_{00}1$ received in S114. Moreover, the plurality of color patches PA1 are formed such that, in the row of the patches of which chroma is changed in order, the absolute value of the chroma difference between the patches P1 and P2 in the improved uniform color space (second scale) and the absolute value of the chroma difference between the patches P2 and P3 in the improved uniform color space (second scale) are identical to the absolute value of the chroma difference $\Delta C_{00}1$ received in S116.

After the color chart is printed, the color adjusting apparatus 100 causes a branching process (S130) depending on whether the color chart CH1 is reprinted with changed conditions. This branching process may branch depending on, for example, operations on a reprint button and a color selection button displayed on the display device 115. In this case, the color adjusting apparatus 100 causes the process to return to S110 when the input device 116 receives an operation on the reprint button and to proceed to S140 when the input device 116 receives an operation on the color selection button. When the process returns to S110, the conditions are set again to print the color chart CH1 based on new conditions, and a color patch is selected from the plurality of color patches PA1 included in the color chart CH1.

When the color chart is not reprinted, the color adjusting apparatus 100 receives selection of a color patch having a color closest to a specified color from the plurality of color patches PA1 included in the color chart CH1 (S140), and then ends the color adjustment process. The process in S140 may be, for example, a process of receiving input of an identification number corresponding to a patch PA1 at the input device 116, a process of receiving a selection operation of a display patch from a plurality of display patches corresponding to the patches PA1 displayed on the display device 115 at the input device 116, and the like.

Upon receiving selection of the color patch, the color adjusting apparatus 100 may generate the color conversion LUT 800 based on the information about the selected color patch. This process may be a process of generating the color conversion LUT 800 by partially modifying a source color conversion LUT serving as the source of the color conversion LUT 800. Here, let the color values of the selected color patch in the Lab color space be ($L_{uniform}$, $a_{uniform}$, $b_{uniform}$), and let the color values of the reference color in the Lab color space be ($L_{p\text{-uniform}}$, $a_{p\text{-uniform}}$, $b_{p\text{-uniform}}$). In this case, the color conversion LUT 800 may be generated by modifying the source color conversion LUT such that, for example, the color values ($L_{p\text{-uniform}}$, $a_{p\text{-uniform}}$, $b_{p\text{-uniform}}$) of the reference color are replaced with the color values ($L_{uniform}$, $a_{uniform}$, $b_{uniform}$) of the selected color patch or approximate to the color values ($L_{uniform}$, $a_{uniform}$, $b_{uniform}$) of the selected color patch.

Referring to the obtained color conversion LUT 800 enables the color reproduction accuracy of print images formed on print substrates to be improved.

(6) Effects and Advantages of Specific Example:

As illustrated in, for example, Fig. 1, the plurality of color patches PA1 are formed on the generated color chart for color selection CH1 such that the absolute values of the color differences in the scales perceptually more uniform than the Lab color system are identical among the color patches. For example, in an area of a lower lightness side, as illustrated in Fig. 2A, the absolute value $\Delta L21$ of the lightness difference between the patches P1 and P2 in the Lab color system is greater than the absolute value $\Delta L32$ of the lightness difference between the patches P2 and p3 in the Lab color system. This enables the patches PA1 to be arranged at intervals of the lightness difference $\Delta L_{00}1$ in the improved uniform color space in the area of a lower lightness side. Moreover, in an area of a higher lightness side, as illustrated in Fig. 2B, the absolute value $\Delta L54$ of the lightness difference between the patches P4 and P5 in the Lab color system is less than the absolute value $\Delta L65$ of the lightness difference between the patches P5 and p6 in the Lab color system.

This enables the patches PA1 to be arranged at intervals of the lightness difference $\Delta L_{00}1$ in the improved uniform color space in the area of a higher lightness side. Furthermore, as illustrated in Fig. 3, the absolute value $\Delta C87$ of the chroma difference between the patches P7 and P8 in the Lab color system is less than the absolute value $\Delta C98$ of the chroma difference between the patches P8 and P9 in the Lab color system. This enables the patches PA1 to be arranged at intervals of the chroma difference $\Delta C_{00}1$ in the improved uniform color space.

Thus, as illustrated in the lower part of Fig. 6, the perceived color differences between the color patches become substantially constant, and the perceived color differences between the color patches become substantially constant in the direction of lightness and in the direction of chroma by setting $\Delta L_{00}1 = \Delta C_{00}1$. This prevents a situation in which it takes time to find a color closest to a target color due to the areas where the perceived differences in color between the patches are relatively small. Moreover, even in the case where the number of color patches PA1 on the color chart CH1 is limited, the perceptual color differences are not small in the areas where the perceived color differences between the color patches are relatively small in the Lab color space. Thus, the area covering the colors the color patches can present can be expanded. Consequently, at least one of the number of times the color chart is generated and the number of color charts to be generated until finding a color patch of a target color can be reduced compared with the case where the color patches are uniformly arranged at intervals of the color difference $\Delta E$ in the Lab color space. According to a test, the number of generated color charts for color selection CH1 and the number of times the color chart for color selection was generated has dropped to half compared with the case based on the Lab color system, resulting in resource savings. Moreover, the number of man-hours (time) to select a color targeted by a user is reduced compared with the case based on the Lab color system, resulting in greater efficiency.

Consequently, according to this specific example, a color chart for color selection including efficiently arranged color patches, a method of generating the color chart for color selection, and a program of generating the color chart for color selection are provided even in the case where the number of color patches or the area of the color chart is limited.

(7) Modified Examples:

Various modifications may be considered for the present invention.

For example, the improved uniform color space may be based on CMC, CIEDE94, or the like.

The printing apparatus may use coloring materials other than CMYK, or may not use part of the CMYK coloring materials. The profile for the printing apparatus may include a correspondence relationship defined according to the type of the coloring materials used by the printing apparatus.

In a case where the color chart is displayed on the display device 115, the profile for the display device may include a defined correspondence relationship between the color values in the Lab color space and values (R value, G value, and B value) indicating the intensities of R (red), G (green), and B (blue).

Moreover, this technique is also applicable when the condition (a) is satisfied without the condition (b) being satisfied. Furthermore, this technique is also applicable when the condition (b) is satisfied without the condition (a) being satisfied.

(8) Conclusion:

As described above, according to the various aspects of the present invention, techniques such as a color chart for color selection including efficiently arranged color patches can be provided. Needless to say, techniques and the like configured with the elements according to the independent claims but without the elements according to the dependent claims may also have the above-described basic effects and advantages.

Moreover, configurations accomplished by replacing the configurations disclosed in the above-described examples with each other or by changing the combination of the configurations, configurations accomplished by replacing known configurations and the configurations disclosed in the above-described examples with each other or by changing the combination of the configurations, and the like are also possible. The present invention also includes the above-described configurations and the like.

Reference Signs List

100 ... Color adjusting apparatus, 114 ... Storage device, 115 ... Display device, 116 ... Input device, 200 ... Printing apparatus, CH1 ... Color chart, FU1 ... Condition setting function, FU2 ... Color chart generation function, FU3 ... Color selection function, M1 ... Print substrate, P1 ... First color patch, P2 ... Second color patch, P3 ... Third color patch, P4 ... Fourth color patch, P5 ... Fifth color patch, P6 ... Sixth color patch, P7 ... Seventh color patch, P8 ... Eighth color patch, P9 ... Ninth color patch, PA1 ... Patch, PA1a ... Patch at center, PF1 ... Profile, PR0 ... Color adjustment program, PR1 ... Color chart generation program, PT1 ... Printed sheet.

**Claims**

1. A color chart for color selection for selecting a color patch having a color closest to a specified color from a plurality of color patches, wherein,
   in the color chart for color selection, the plurality of color patches including a first color patch, a second color patch, and a third color patch arranged in order are formed, and
   the color chart for color selection satisfies at least one of conditions (a) and (b) below:

   (a) an absolute value of a lightness difference between the first color patch and the second color patch in a first scale that is perceptually more uniform than lightness in the International Commission on Illumination (CIE) L*a*b* color system and an absolute value of a lightness difference between the second color patch and the third color patch in the first scale are identical;
   (b) an absolute value of a chroma difference between the first color patch and the second color patch in a second scale that is perceptually more uniform than chroma in the CIE L*a*b* color system and an absolute value of a chroma difference between the second color patch and the third color patch in the second scale are identical.

2. A color chart for color selection for selecting a color patch having a color closest to a specified color from a plurality of color patches, wherein,
   in the color chart for color selection, the plurality of color patches including a first color patch, a second color patch, and a third color patch arranged in order are formed, and
   in the International Commission on Illumination (CIE) L*a*b* color system,

   lightness of the second color patch is higher than lightness of the first color patch,
   lightness of the third color patch is higher than the lightness of the second color patch, and
   an absolute value of a lightness difference between the first color patch and the second color patch is greater than an absolute value of a lightness difference between the second color patch and the third color patch.

3. The color chart for color selection according to claim 2, wherein
   the plurality of color patches includes a fourth color patch, a fifth color patch, and a six color patch arranged in order, and
   in the CIE L*a*b* color system,

   lightness of the fourth color patch is higher than the lightness of the third color patch,
   lightness of the fifth color patch is higher than the lightness of the fourth color patch,
   lightness of the sixth color patch is higher than the lightness of the fifth color patch, and
   an absolute value of a lightness difference between the fourth color patch and the fifth color patch is less than an absolute value of a lightness difference between the fifth color patch and the sixth color patch.

4. A color chart for color selection for selecting a color patch having a color closest to a specified color from a plurality of color patches, wherein,
   in the color chart for color selection, the plurality of color patches including a seventh color patch, an eighth color patch, and a ninth color patch arranged in order are formed, and
   in the International Commission on Illumination (CIE) L*a*b* color system,

   chroma of the eighth color patch is higher than chroma of the seventh color patch,
   chroma of the ninth color patch is higher than the chroma of the eighth color patch, and
   an absolute value of a chroma difference between the seven color patch and the eighth color patch is less than an absolute value of a chroma difference between the eighth color patch and the ninth color patch.

5. A method of generating a color chart for color selection for selecting a color patch having a color closest to a specified color from a plurality of color patches, the plurality of color patches including a first color patch, a second color patch, and a third color patch arranged in order, the method comprising:
   generating the color chart for color selection satisfying at least one of conditions (a) and (b) below:

   (a) an absolute value of a lightness difference between the first color patch and the second color patch in a first scale that is perceptually more uniform than lightness in the International Commission on Illumination (CIE) L*a*b* color system and an absolute value of a lightness difference between the second color patch and the third color patch in the first scale are identical;

(b) an absolute value of a chroma difference between the first color patch and the second color patch in a second scale that is perceptually more uniform than chroma in the CIE L*a*b* color system and an absolute value of a chroma difference between the second color patch and the third color patch in the second scale are identical.

6. The method of generating the color chart for color selection according to claim 5, wherein
lightness of the first scale is lightness in a color space perceptually more uniform than the CIE L*a*b* color system, and chroma of the second scale is chroma in a color space perceptually more uniform than the CIE L*a*b* color system.

7. The method of generating the color chart for color selection according to claim 5 or 6, comprising:

receiving an input of an absolute value of a lightness difference in the first scale; and
forming the plurality of color patches to cause an absolute value of a lightness difference between the first color patch and the second color patch in the first scale and an absolute value of a lightness difference between the second color patch and the third color patch in the first scale to be identical to the absolute value of the lightness difference received.

8. The method of generating the color chart for color selection according to any one of claims 5 to 7, comprising:

receiving an input of an absolute value of a chroma difference in the second scale; and
forming the plurality of color patches to cause an absolute value of a chroma difference between the first color patch and the second color patch in the second scale and an absolute value of a chroma difference between the second color patch and the third color patch in the second scale to be identical to the absolute value of the chroma difference received.

9. The method of generating the color chart for color selection according to any one of claims 5 to 8, wherein
generating the color chart for color selection to satisfy at least one of the conditions (a) and (b) reduces at least one of a number of times the color chart for color selection is generated and a number of color charts for color selection to be generated until finding a color patch of a target color,
compared with a case where the color chart for color selection is generated to satisfy a condition (c) below when the condition (a) is satisfied and to satisfy a condition (d) below when the condition (b) is satisfied:

(c) an absolute value of a lightness difference between the first color patch and the second color patch in the CIE L*a*b* color system and an absolute value of a lightness difference between the second color patch and the third color patch in the CIE L*a*b* color system are identical;
(d) an absolute value of a chroma difference between the first color patch and the second color patch in the CIE L*a*b* color system and an absolute value of a chroma difference between the second color patch and the third color patch in the CIE L*a*b* color system are identical.

10. A program of generating a color chart for color selection for causing a computer to perform a function of generating a color chart for color selection for selecting a color patch having a color closest to a specified color from a plurality of color patches, wherein
the plurality of color patches includes a first color patch, a second color patch, and a third color patch arranged in order; and
the program causes the computer to generate the color chart for color selection satisfies at least one of conditions (a) and (b) below to be performed:

(a) an absolute value of a lightness difference between the first color patch and the second color patch in a first scale that is perceptually more uniform than lightness in the International Commission on Illumination (CIE) L*a*b* color system and an absolute value of a lightness difference between the second color patch and the third color patch in the first scale are identical;
(b) an absolute value of a chroma difference between the first color patch and the second color patch in a second scale that is perceptually more uniform than chroma in the CIE L*a*b* color system and an absolute value of a chroma difference between the second color patch and the third color patch in the second scale are identical.

**Amended claims under Art. 19.1 PCT**

1.  (Deleted)

2.  (Deleted)

3.  (Deleted)

4.  (Deleted)

5.  (Amended) A method of generating a color chart for color selection for selecting a color patch having a color closest to a specified color from a plurality of color patches, the plurality of color patches including a first color patch, a second color patch, and a third color patch arranged in order, the method comprising:

    receiving an input of an absolute value of a lightness difference in a first scale that is perceptually more uniform than lightness in the International Commission on Illumination (CIE) L*a*b* color system; and
    forming the plurality of color patches such that an absolute value of a lightness difference between the first color patch and the second color patch in the first scale and an absolute value of a lightness difference between the second color patch and the third color patch in the first scale are identical to the absolute value of the lightness difference received.

6.  (Added) A method of generating a color chart for color selection for selecting a color patch having a color closest to a specified color from a plurality of color patches, the plurality of color patches including a first color patch, a second color patch, and a third color patch arranged in order, the method comprising:

    receiving an input of an absolute value of a chroma difference in a second scale that is perceptually more uniform than chroma in the International Commission on Illumination (CIE) L*a*b* color system; and
    forming the plurality of color patches such that an absolute value of a chroma difference between the first color patch and the second color patch in the second scale and an absolute value of a chroma difference between the second color patch and the third color patch in the second scale are identical to the absolute value of the chroma difference received.

7.  (Amended) The method of generating the color chart for color selection according to claim 1, wherein lightness of the first scale is lightness in a color space perceptually more uniform than the CIE L*a*b* color system.

8.  (Added) The method of generating the color chart for color selection according to claim 2, wherein chroma of the second scale is chroma in a color space perceptually more uniform than the CIE L*a*b* color system.

9.  (Deleted)

10. (Deleted)

11. (Amended) The method of generating the color chart for color selection according to claim 1, wherein at least one of a number of times a color chart for color selection is generated and a number of color charts for color selection to be generated until finding a color patch of a target color is reduced by generating the color chart for color selection according to claim 1, compared with a case where a color chart for color selection is generated to satisfy a condition that an absolute value of a lightness difference between the first color patch and the second color patch in the CIE L*a*b* color system and an absolute value of a lightness difference between the second color patch and the third color patch in the CIE L*a*b* color system are identical.

12. (Added) The method of generating the color chart for color selection according to claim 2, wherein at least one of a number of times a color chart for color selection is generated and a number of color charts for color selection to be generated until finding a color patch of a target color is reduced by generating the color chart for color selection according to claim 2, compared with a case where a color chart for color selection is generated to satisfy a condition that an absolute value of a chroma difference between the first color patch and the second color patch in the CIE L*a*b* color system and an absolute value of a chroma difference between the second color patch and the third color patch in the CIE L*a*b* color system are identical.

**13.** (Amended) A program of generating a color chart for color selection for causing a computer to perform a function of generating a color chart for color selection for selecting a color patch having a color closest to a specified color from a plurality of color patches, wherein
the plurality of color patches includes a first color patch, a second color patch, and a third color patch arranged in order;
the program causes the computer to

receive an input of an absolute value of a lightness difference in a first scale that is perceptually more uniform than lightness in the International Commission on Illumination (CIE) L*a*b* color system; and
form the plurality of color patches such that an absolute value of a lightness difference between the first color patch and the second color patch in the first scale and an absolute value of a lightness difference between the second color patch and the third color patch in the first scale are identical to the absolute value of the lightness difference received.

**14.** (Added) A program of generating a color chart for color selection for causing a computer to perform a function of generating a color chart for color selection for selecting a color patch having a color closest to a specified color from a plurality of color patches, wherein
the plurality of color patches includes a first color patch, a second color patch, and a third color patch arranged in order;
the program causes the computer to

receive an input of an absolute value of a chroma difference in a second scale perceptually more uniform than chroma in the International Commission on Illumination (CIE) L*a*b* color system; and
form the plurality of color patches such that an absolute value of a chroma difference between the first color patch and the second color patch in the second scale and an absolute value of a chroma difference between the second color patch and the third color patch in the second scale are identical to the absolute value of the chroma difference received.

**Statement under Art. 19.1 PCT**

Claims 1 to 4, 9, and 10 have been deleted, claims 5, 7, 11, and 13 have been amended, and claims 6, 8, 12, and 14 have been added.
Claim 5 after amendment and the added claim 6 have been amended based on claims 5, 7, and 8 before amendment and the descriptions of paragraphs [0030], [0031], and [0065] in the Description.
Claim 7 after amendment and the added claim 8 have been amended based on claim 6 before amendment and the descriptions of paragraphs [0029] and [0035] in the Description.
Claim 11 after amendment and the added claim 12 have been amended based on claim 9 before amendment and the descriptions of paragraphs [0032] and [0072] in the Description.
Claim 13 after amendment and the added claim 14 have been amended based on claim 10 before amendment and the descriptions of paragraphs [0010], [0030] to [0034], [0062], and [0072] in the Description.

Fig. 1

# Fig. 2A

LP1 < LP2 < LP3

PT1   CH1

PA1

ΔL₀₀1

P3

ΔL32

ΔL₀₀1

P2

ΔL21

ΔL₀₀1

P1

PA1

ΔL21 > ΔL32

# Fig. 2B

LP3 < LP4 < LP5 < LP6

PT1   CH1

PA1   P6

ΔL65

ΔL₀₀1

P5

ΔL54

ΔL₀₀1

P4

ΔL₀₀1

PA1

ΔL54 < ΔL65

CP7 < CP8 < CP9

Fig. 3

L'-S$_L$ CURVE

Fig. 4A

C'-S$_C$ CURVE

Fig. 4B

L*-L$_{00}$ CHARACTERISTIC

Fig. 5A

C*-C$_{00}$ CHARACTERISTIC

Fig. 5B

Fig. 6

Fig. 7A

Fig. 7B

COLOR ADJUSTING APPARATUS 100

CPU 111

ROM 112

RAM 113

STORAGE DEVICE 114

DISPLAY DEVICE 115

INPUT DEVICE 116

COMMUNICATION I/F 118

COLOR ADJUSTMENT PROGRAM PR0

CONDITION SETTING FUNCTION FU1

COLOR CHART GENERATION FUNCTION FU2 [COLOR CHART GENERATION PROGRAM PR1]

COLOR SELECTION FUNCTION FU3

PROFILE PF1

COLOR CONVERSION LUT 800

COMMUNICATION I/F 210

PRINTING APPARATUS 200

Fig. 8

COLOR ADJUSTMENT PROCESS

S110 CONDITION SETTING PROCESS

S112 RECEPTION OF INPUT OF REFERENCE COLOR

S114 RECEPTION OF INPUT OF PERCEPTUAL LIGHTNESS DISTANCE

S116 RECEPTION OF INPUT OF PERCEPTUAL CHROMA DISTANCE

S120 PRINTING OF COLOR CHART FOR COLOR SELECTION

S130 REPRINT? YES

NO

S140 COLOR SELECTION

END

Fig. 9

COMPARATIVE EXAMPLE

Fig. 10

COMPARATIVE EXAMPLE

Fig. 11

## INTERNATIONAL SEARCH REPORT

| International application No. |
| --- |
| PCT/JP2017/005185 |

**A. CLASSIFICATION OF SUBJECT MATTER**
*B41J29/393*(2006.01)i, *B41J2/525*(2006.01)i, *G01J3/52*(2006.01)i, *H04N1/46*(2006.01)i, *H04N1/60*(2006.01)i

According to International Patent Classification (IPC) or to both national classification and IPC

**B. FIELDS SEARCHED**

Minimum documentation searched (classification system followed by classification symbols)
B41J29/393, B41J2/525, G01J3/52, H04N1/46, H04N1/60

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2013-101063 A  (Seiko Epson Corp.), 23 May 2013 (23.05.2013), paragraphs [0016] to [0028]; fig. 2 to 4 (Family: none) | 1–10 |
| A | JP 2011-77937 A  (Fujifilm Corp.), 14 April 2011 (14.04.2011), entire text; fig. 1 to 15 & US 2011/0075223 A1    & EP 2306700 A2 | 1–10 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 March 2017 (30.03.17) | 11 April 2017 (11.04.17) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011077937 A